(19) Europäisches Patentamt
European Patent Office
Office européen des brevets

(11) **EP 4 787 292 A1**

(12) **EUROPEAN PATENT APPLICATION**

(43) Date of publication:
**05.08.2026 Bulletin 2026/32**

(21) Application number: **25154684.2**

(22) Date of filing: **29.01.2025**

(51) International Patent Classification (IPC):
**G06T 5/70** (2024.01)　　　　**G06T 5/50** (2006.01)
**G06T 5/20** (2006.01)

(52) Cooperative Patent Classification (CPC):
**G06T 5/20; G06T 5/50; G06T 5/70;**
G06T 2207/10081; G06T 2207/20028;
G06T 2207/20081; G06T 2207/20221;
G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AE Eindhoven (NL)**

(72) Inventor: **BROWN, Kevin Martin
Eindhoven (NL)**

(74) Representative: **Philips Intellectual Property &
Standards
High Tech Campus 34
5656 AE Eindhoven (NL)**

(54) **SPECTRAL IMAGE DENOISING**

(57)　Disclosed methods and systems relate to denoising a basis material spectral CT image of an anatomical structure. It involves obtaining a noise estimate image with noise values associated with different parts of the spectral CT image, and a structural image describing the anatomical structure. The noise estimate image is modified based on the structural image. For example, the noise estimate image may indicate the presence of more noise in parts of the spectral CT image that are associated with air, as indicated by the structural image. A denoised spectral CT image is then generated using a spectral image denoising algorithm, based on the spectral CT image and the modified noise estimate image. Accordingly, a denoised spectral CT basis material image that may be used to generate certain spectral results images of higher quality may be provided.

FIG. 1

**Description**

FIELD OF INVENTION

The present invention relates to the field of spectral computed tomography (CT) image reconstruction, and more specifically, to methods and systems for enhancing the denoising of spectral CT images.

BACKGROUND

Spectral computed tomography (CT) is a medical imaging technique that provides detailed information about the composition of body tissues. It works by using different energy levels to capture multiple images of the same area, which are then combined to create a spectral image. This image can be used to identify and differentiate between various types of tissues and materials within the body, providing valuable diagnostic information.

Image denoising is a pivotal step in spectral CT image reconstruction. Due to the material decomposition step, basis material spectral CT images, for example photo and scatter basis images, tend to be noisier than conventional CT images for the same dose and patient anatomy. This necessitates more effort in the denoising steps to produce clinically useful spectral CT images.

In spectral CT, the basis material images are used in different combinations to deliver multiple different types of spectral results images. These can include Mono-E's, Iodine Density, Z-effective, Calcium Suppressed, and more. However, it can be challenging to produce basis images that are optimal for each of the different spectral results image types. That is, a change in the denoising algorithm that yields an improvement in one result type can often result in a degradation for a different result type.

Therefore, there exists a need for an improved approach for denoising basis material spectral CT images.

SUMMARY OF INVENTION

The invention is defined by the claims.

According to an aspect of the present disclosure, a method is provided for enhancing the denoising of basis material spectral computed tomography (CT) images.

The method comprises:

obtaining a noise estimate image comprising a plurality of noise values, each noise value associated with a different part of the spectral CT image and describing an expected noise level (i.e. standard deviation) in the associated part of the spectral CT image;
obtaining a structural image describing the anatomical structure of the subject included in the spectral CT image;
modifying the noise estimate image based on the structural image; and
generating, using a spectral image denoising algorithm, a denoised spectral CT image based on the spectral CT image and the modified noise estimate image.

Disclosed methods and systems relate to denoising a basis material spectral CT image of an anatomical structure. It involves obtaining a noise estimate image with noise values associated with different parts of the spectral CT image, and a structural image describing the anatomical structure. The noise estimate image is modified based on the structural image. For example, the noise estimate image may indicate the presence of more noise in parts of the spectral CT image that are associated with air, as indicated by the structural image. A denoised spectral CT image is then generated using a spectral image denoising algorithm, based on the spectral CT image and the modified noise estimate image. Accordingly, a denoised spectral CT basis material image that may be used to generate certain spectral results images of higher quality may be provided.

In other words, embodiments of the invention propose to alter a noise estimate image, which is used to determine a degree of denoising applied to different parts of the basis material spectral CT image, based on the anatomical structure in the spectral CT image. For example, it may be beneficial to increase a degree of denoising/smoothing applied to parts of the spectral CT image that correspond to air (e.g., have a HU unit near that of air), whilst maintaining a nominal degree of denoising for parts of the spectral CT image that correspond to muscle, bone, etc. As a result, the spectral basis material image may be denoised in a way that improves specific results (e.g., Z-effective images), while minimizing the impact on other spectral results (e.g., Mono-E images).

By way of explanation, due to the material decomposition step, basis material spectral CT images (e.g., photo and scatter basis images) are typically noisier than conventional CT images for the same dose and patient anatomy. Accordingly, there is a need for a higher degree of denoising. However, the basis material images are used in different combinations to deliver multiple different types of spectral results images. A change in the denoising algorithm that yields an improvement in one result type can often result in a degradation for a different result type. Thus, it can be challenging to produce basis images that are optimal for each of the different spectral results image types.

It has been realized that increasing the degree of denoising in certain parts of the basis material images, whilst maintaining a nominal degree of denoising in other parts of the basis material images (depending on the anatomical material in that part of the image), may provide a denoised basis material spectral CT image that can be used to provide high quality spectral results images of certain types, without negatively impacting other types of spectral results image. Accordingly, the disclosed concepts aim to modify the noise estimate image based on the anatomical material corresponding to certain parts of the spectral image (as described by a structural image), so that when a denoising algorithm is applied using the noise estimate image, certain parts of the basis material spectral CT image experience a greater degree of denoising. Thus, a denoising process for basis material spectral CT images is improved.

The improved denoising may facilitate the generation of improved spectral results images. Accordingly, clinical decision making and conclusions made using such spectral results images may be improved. In turn, this may help to save clinician time and improve subject outcomes.

In some embodiments, the structural image may comprise a plurality of Hounsfield Unit (HU) values. Each HU value may be associated with a different part of the spectral CT image. HU values accurately reflect the material present in parts of an image. That is, certain HU values indicate that the imaged material is air, water, bone, muscle, etc. Accordingly, an accurate understanding of which parts of the spectral CT image correspond to certain anatomical materials may be achieved.

In this case, modifying the noise estimate image may comprise, for each of the plurality of noise values, adjusting the noise value based on the HU value associated with the same part of the spectral CT image as the noise value. More specifically, adjusting the noise value may comprise scaling the noise value based on an inverse of the HU value. Accordingly, a modified estimate noise image may be obtained that has the structural data encoded in it, which may be used to generate a denoised spectral CT image more suitable for generating certain spectral results.

In some embodiments, the structural image is based on a non-spectral CT image of the anatomical structure of the subject. As a result, the structural image may be acquired at the same time as the basis material spectral CT image. Identification of parts of the spectral CT image corresponding to certain structures may therefore be performed in a straightforward manner. Furthermore, non-spectral CT images typically contain much less noise than spectral CT images, and therefore the structures may be more easily identified.

In this case, obtaining the noise estimate image may comprise generating, using a non-spectral image denoising algorithm, a denoised non-spectral CT image based on the non-spectral CT image; and generating the noise estimate image based on a difference between the denoised non-spectral CT image and the non-spectral CT image. That is, the noise estimate image may be derived from the non-spectral CT image used for determining the structural image. Accordingly, the structural image, noise estimate image, and basis material spectral CT image be compared in a straightforward manner.

In particular, generating the denoised non-spectral CT image comprises providing the non-spectral CT image to a machine-learning based algorithm. As the non-spectral image denoising algorithm is a machine-learning based algorithm, a more accurate denoised non-spectral CT image may be acquired.

Furthermore, the structural image may be the denoised non-spectral CT image. Thus, the structural image may clearly contain accurate structural information of the anatomy of the subject.

In particular embodiments, generating the denoised spectral CT image comprises applying a bi-lateral filter to the spectral CT image, wherein one or more parameters of the bi-lateral filter are based on the modified noise estimate image. The range weight of the bi-lateral filter may be based on the modified noise estimate image. More specifically, the range weight of the bi-lateral filter is defined according to:

$$w^{Range}(i') = exp\left(-\frac{(S(i) - S(i + i'))^2}{2(\alpha\sigma^{Noise}(i))^2}\right)$$

wherein S(i) represents the structural image, and $\sigma^{Noise}$ represents the modified noise estimate image.

Thus, an existing algorithm for denoising the basis material spectral CT image may be employed, requiring little adaptation to existing denoising processes. That is, the modified noise estimate image may be used as input to an existing denoising algorithm (i.e., the bi-lateral filter), and may provide more accurate results. Indeed, this may provide a denoised spectral CT image of high quality.

In additional embodiments, the method may further comprise generating at least one spectral result image based on the denoised spectral CT image. Specifically, the method may comprise generating a Mono-E, an Iodine Density, Z-effective and/or a Calcium Suppressed spectral result image based on the denoised spectral CT image. Thus, the denoised spectral CT image may be used to generate a variety of spectral result images, improving the quality of some of the result images, whilst avoiding negative impact on other results images.

According to another aspect of the invention, there is provided a system for denoising a basis material spectral CT image of an anatomical structure. The system comprises:
an interface configured to:

obtain a noise estimate image comprising a plurality of noise values, each noise value associated with a different part of the spectral CT image and describing an expected noise level in the associated part of the spectral CT image; and
obtain a structural image describing the anatomical structure of the subject included in the spectral CT image;
a noise adaptation module configured to modify the noise estimate image based on the structural image; and
a filtering module configured to generate, using a spectral image denoising algorithm, a denoised spectral CT image based on the spectral CT image and the modified noise estimate image.

These and other aspects of the invention will be apparent from and elucidated with reference to the embodiment(s) described hereinafter.

BRIEF DESCRIPTION OF FIGURES

For a better understanding of the invention, and to show more clearly how it may be carried into effect, reference will now be made, by way of example only, to the accompanying drawings, in which:

Fig. 1 illustrates a flowchart of a basis material spectral CT image denoising process, according to aspects of the present disclosure.
Fig. 2 depicts a block diagram of a spectral CT image processing system, in accordance with aspects of the present disclosure.
Fig. 3 shows a block diagram of a computing system, according to aspects of the present disclosure.

DETAILED DESCRIPTION

The invention will be described with reference to the Figures.

The present disclosure pertains to methods and systems for enhancing the denoising of basis material spectral computed tomography (CT) images. More specifically, the method involves the use of a structural image and a noise estimate image. The structural image contains the same structures as the spectral images to be de-noised, but in a domain with much lower noise. The noise estimate image may control the aggressiveness of a spectral image denoising algorithm with respect to smoothing different parts of the spectral image. For example, by increasing the value of the noise estimate image for areas of the spectral image corresponding to air (as defined in the structural image), regions corresponding to air may receive more smoothing, while other regions of the image may remain unchanged. This approach may improve the spectral basis material image denoising for specific results, while minimizing the impact on other spectral results.

In particular, the disclosure provides a method for modifying the noise estimate input into a spectral image denoising algorithm (e.g., a structure propagation algorithm) based on Hounsfield Unit (HU) values described by a structural image. Accordingly, areas of the structural image with a HU value close to that of air will indicate parts of the spectral image that correspond to air. Accordingly, the noise estimate image may be modified based on this knowledge, for example to increase the degree of smoothing of the spectral image in areas corresponding to air. This method may be beneficial in improving the quality of spectral CT images, particularly in regions of low attenuation such as lung regions.

In other words, the present disclosure pertains to a method for enhancing the denoising of basis material spectral CT images. In a particular embodiment, the method modifies the noise estimate input image into a structure propagation algorithm based on HU values. The structure propagation algorithm, a denoising method for basis material spectral CT images, uses a bi-lateral filter where the range weight is determined by a formula that includes a structure estimate image and a noise estimate image. The structural estimate image contains the same structures as the spectral images to be de-noised, but in a domain with much lower noise. The noise estimate image controls the aggressiveness of the range weights with respect to smoothing.

The main concept of the disclosed method is the leveraging of knowledge of the structure of the anatomy in the basis material spectral CT image (e.g., by using the HU values in the structural estimate image) to increase the value of the noise estimate image in areas which corresponding to air (e.g., where the HU values are close to those of air). This means that the regions corresponding to air will receive more smoothing, while other regions of the image will remain unchanged.

The disclosed method provides several advantages. It improves Z-effective spectral results in lung regions, has little impact on Mono-E images in the lungs, and zero impact to higher HU regions like fat, muscle, and bone. This method provides a way to increase the denoising strength in specific regions of the image, while leaving other regions unchanged, resulting in improved image quality for specific types of spectral results.

By way of further explanation, typical methods for generating a Z-effective spectral result image involves the ratio of Mono-E spectral results images at 120 and 70 Kev. Because ratios of small numbers are inherently unstable, slight remaining noise in the photo & scatter spectral basis material CT images in regions of low attenuation can result in undesired hot spots in the Z-effective spectral results images. This is particularly the case in lung regions. The hot spots in Z-effective images could be reduced by increasing the smoothing strength of the denoising globally, but that would then also smooth other structures where the current image quality is preferred (such as lung and cardiac vessels, bones, etc.). Indeed, in contrast to the Z-effective spectral result images, Mono-E images are not so sensitive to residual noise in the lung background, and therefore increasing the strength of denoising globally can lead to Mono-E images of reduced quality.

Therefore, according to some embodiments, it is proposed to increase the denoising strength only in the background region of the lungs (with HU close to air), while leaving the other regions of the patient unchanged. Proposed embodiments may preserve the important structures in images (like the lung vessels), resulting in a very low impact to spectral result images.

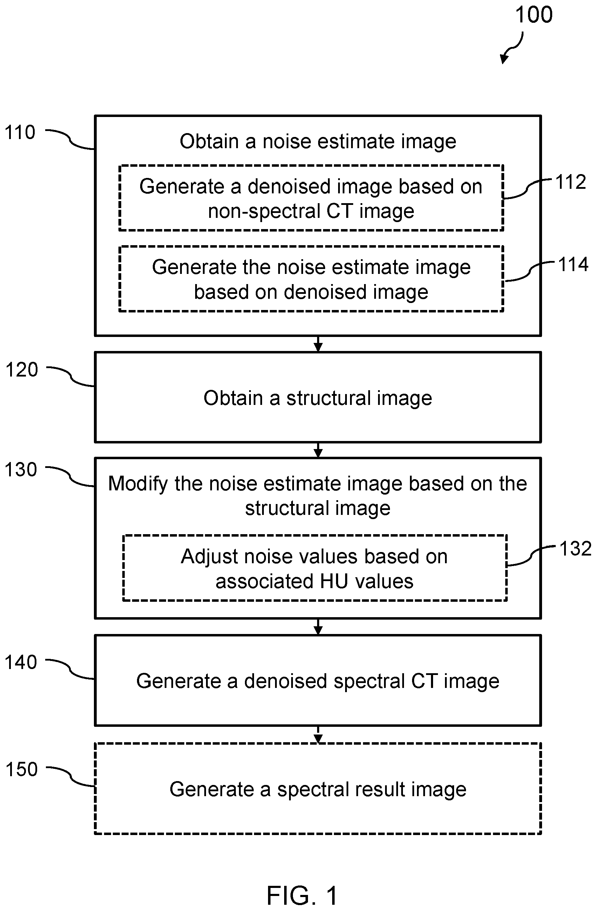

Referring to Fig. 1, a basis material spectral CT image denoising process 100 is depicted. To be clear, a basis material spectral CT image is, for example, a photo or scatter basis image, which may be combined in different combinations to produce different types of spectral results images (e.g., Mono-E, Iodine Density, Z-effective, Calcium Suppressed, etc.). The basis material spectral CT image may be of an anatomical structure such as a heart, a bone, or a lung of the subject.

Due to the material decomposition step in basis material spectral CT image generation, these images are much more noisy than conventional CT images. Accordingly, these images require additional denoising to produce an adequate image. However, simply increasing the amount of denoising applied to the basis material spectral CT image can have an adverse effect on some of the resultant spectral results images. Accordingly, an improved denoising process is provided as shown in Fig. 1.

The spectral image denoising process 100 may begin with an initial noise estimate step 110, where a noise estimate image is obtained. The noise estimate image comprises a plurality of noise values, each noise value associated with a different part of the spectral CT image and describing an expected noise in the associated part of the spectral CT image. For example, each noise value may correspond to a certain voxel of the captured basis material spectral CT image.

Typically, the noise values are used to determine a type and extent of denoising to be performed on the spectral CT image. That is, a greater noise value (i.e., a noise value indicating increased noise level in the region) results in a greater extent of denoising performed on the part of the spectral CT image associated with the greater noise value.

In specific embodiments, obtaining the noise estimate image may comprise a step 112 of generating a denoised image based on a non-spectral CT image. For example, the denoised non-spectral CT image may be generated using a non-spectral image denoising algorithm based on a non-spectral CT image. The non-spectral CT image may be acquired at the same time as the spectral CT image, and therefore may depict the same anatomical structure of the subject as the spectral CT image. The non-spectral image denoising algorithm may be a machine-learning based algorithm. Nevertheless, denoising algorithms for CT images are well known, and therefore will not be described in detail here for the sake of brevity.

Then, the noise estimate image is generated in step 114 based on a difference between the denoised non-spectral CT image and the non-spectral CT image.

This method of generation of the noise estimate image is based on the realization that similar noise levels will likely be present in similar parts of the spectral and non-spectral CT image. Thus, by denoising the non-spectral CT image (which is more straightforward due to a lower prevalence of noise in non-spectral CT images), and comparison with the original non-spectral CT image, an estimate of the noise in the spectral CT image may be obtained.

Moving on, at step 120, structural image acquisition is performed to obtain a structural image. The structural image describes the anatomical structure of the subject included in the spectral CT image. More specifically, the structural image describes the anatomical material of the subject in the image. For example, parts of the structural image may correspond to bone, muscle, fat, air, etc.

The structural image may be any image that describes the anatomical structure of the subject. The structural image may be taken from, for example, electronic medical records of the subject. In specific embodiments, the structural image is based on a non-spectral CT image of the anatomical structure of the subject. For example, the non-spectral CT image upon which the structural image is based may be the non-spectral CT image used in relation to step 112. In another example, the denoised non-spectral CT image may be the structural image. However, embodiments are not restricted hereto.

In an exemplary embodiment, the structural image comprises a plurality of Hounsfield Unit, HU, values, each HU value associated with a different part of the spectral CT image. Different HU values indicate different body tissues and materials. For example, the approximate HU value for air is - 1000, fat is -120 to -90, and soft tissue is 100 to 300. Accordingly, a structural image comprising a plurality of HU values describes the anatomical structure of the spectral CT image.

In step 130, the noise estimate image is modified. Specifically, the noise estimate image based on the structural image. To paraphrase, the noise estimate is altered based on the anatomical structure of the subject. For example, parts of the noise estimate image corresponding to certain anatomical structures may be adjusted to indicate more or less noise in that part of the spectral CT image. Specifically, parts of the noise estimate image corresponding to air may be altered to indicate a greater prevalence of noise, whilst parts of the noise estimate image corresponding to bone may not be altered or may be altered to indicate a lower prevalence of noise.

In a specific embodiment, step 132 may be performed, whereby the noise values of the noise estimate image are adjusted based on the HU value associated with the same part of the spectral CT image as the noise value. That is, the structural image contains HU values, and using those HU values, the estimated noise in the corresponding part of the spectral CT image may be adjusted.

According to an exemplary embodiment, adjusting each noise value comprises scaling the noise value based on an inverse of the HU value corresponding to the same part of the anatomical structure. As a result, a lower HU value (i.e., a HU value more closely associated with air) will result in a larger increase in the noise value, thus indicating an increased prevalence of noise in that region. In addition, with a greater HU value (i.e., a HI value less closely associated with air, and more closely associated with soft tissue and bone) will result in either no difference in the noise value or a decreased noise value, thus indicating a decreased prevalence of noise in that region.

In step 140, a denoised spectral CT image is generated based on the basis material spectral CT image and the modified noise estimate image. The denoised spectral CT image may be generated by using a spectral image denoising algorithm. In other words, the spectral CT image and the modified noise estimate image are provided to a spectral image denoising algorithm, which in turn outputs a denoised spectral CT image. The denoised spectral CT image may thus have a decreased prevalence of noise than the spectral CT image, and may be used to produce more accurate spectral results images.

The spectral image denoising algorithm may be any known denoising algorithm used for spectral CT images. Adapting the inputs for such algorithms would be a straightforward practice for the skilled person.

Nevertheless, in a specific embodiment, generating the denoised spectral CT image comprises applying a bi-lateral filter to the spectral CT image, wherein one or more parameters of the bi-lateral filter are based on the modified noise estimate image. That is, the spectral image denoising algorithm may comprise a step of applying a bi-lateral filter, the parameters of which are based on the modified noise estimate image. More particularly, the range weight of the bi-lateral filter is based on the modified noise estimate image.

The bilateral filter is a non-linear, edge-preserving, and noise-reducing smoothing filter for images, and may be particularly suitable for smoothing/denoising spectral CT images.

Generally, the range weight of the bi-lateral filter for each pixel (i') of the spectral CT image is defined according to:

$$w^{Range}(i') = exp\left(-\frac{(S(i) - S(i + i'))^2}{2(\alpha\sigma^{Noise}(i))^2}\right) \qquad [1]$$

wherein S(i) represents the structural image, and $\sigma^{Noise}$ represents the modified noise estimate image. Accordingly, with a higher noise value expressed by the modified noise estimate image, the greater the extent of the smoothing applied by the spectral image denoising algorithm. In some embodiments, this may mean that areas of the spectral CT image corresponding to air may be heavily smoothed/denoised, whilst areas of the spectral CT image corresponding to bone may be lightly denoised. As a result, an improved Z-effective result image may be generated from the denoised spectral CT image, whilst the generation of an E-Mono result image may be largely unaffected.

Thus, the method 100 may conclude with the generation of at least one spectral result image in step 150. For example, step 150 may comprise generating one or more of a Mono-E, an Iodine Density, Z-effective and/or a Calcium Suppressed spectral result image based on the denoised spectral CT image. The result image generation may be performed using any standard method known in the art.

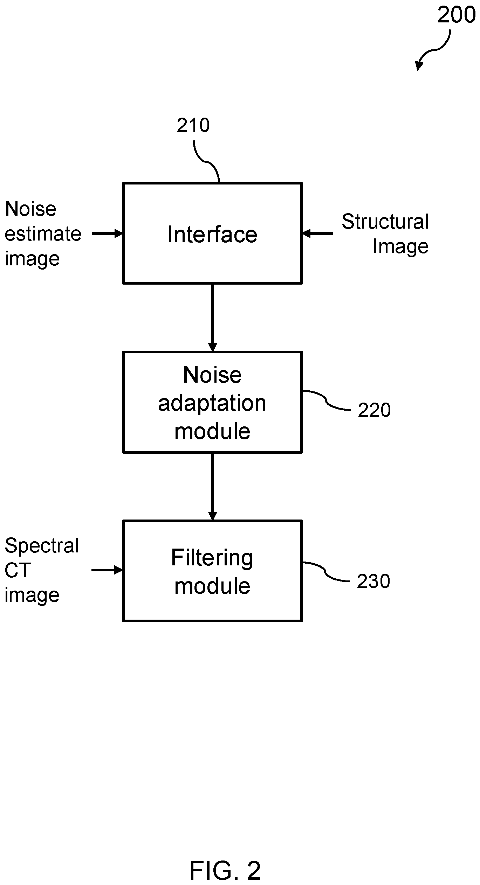

Referring now to Fig. 2, a block diagram of a spectral CT image processing system 200 is depicted. The spectral CT image processing system 200 may include an interface module 210, a noise adaptation module 220, and a filtering module 230. In some aspects, the interface module 210 may receive a structural image and a noise estimate image. These images may then be processed by the noise adaptation module 220.

In some cases, the noise adaptation module 220 may adjust the noise estimate based on the input from the interface module 210. This adjustment may involve modifying the noise estimate to increase the value for HU values which are close to air, as previously described. This modification may result in regions with HU close to air receiving more smoothing, while other regions of the image may remain unchanged.

Following the adjustment of the noise estimate, the modified noise estimate may then be used by the filtering module 230 to process the basis material spectral CT image. In some aspects, the filtering module 230 may apply a bi-lateral filter to the basis material spectral CT image using the modified noise estimate. This may result in a denoised spectral CT image with improved image quality for specific types of spectral results.

The configuration of the spectral CT image processing system 200 as depicted in Fig. 2 illustrates the flow of data and the functional relationship between the components within the system. This configuration may allow for the efficient processing of spectral CT images and the enhancement of their denoising, while minimizing the impact on other spectral results.

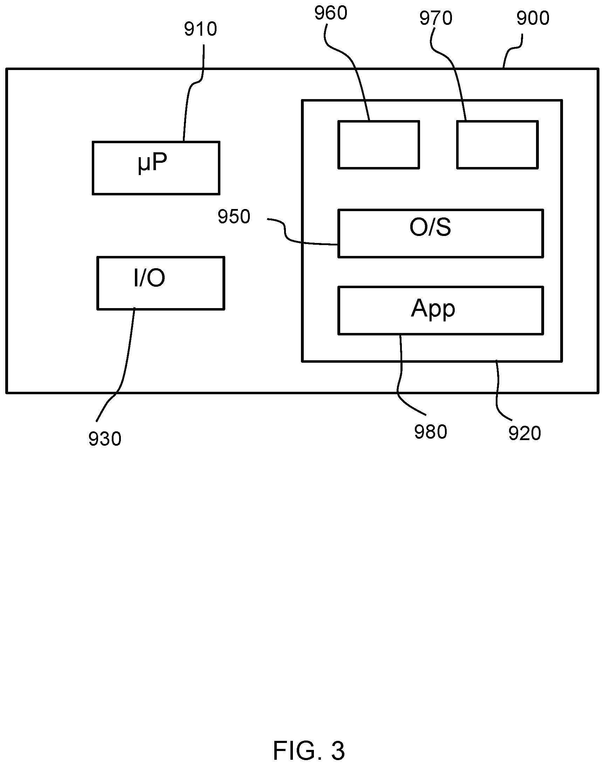

Fig. 3 illustrates an example of a computer 900 within which one or more parts of an embodiment may be employed. Various operations discussed above may utilize the capabilities of the computer. For example, one or more parts of a proposed embodiment may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 900 includes, but is not limited to, PCs, workstations, laptops, PDAs, palm devices, servers, storages, and the like. Generally, in terms of hardware architecture, the computer 900 may include one or more processors 910, memory 920 and one or more I/O devices 930 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 910 is a hardware device for executing software that can be stored in the memory 920. The processor 910 can be virtually any custom made or commercially available processor, a central processing unit (CPU), a digital signal processor (DSP), or an auxiliary processor among several processors associated with the computer 900, and the processor 910 may be a semiconductor based microprocessor (in the form of a microchip) or a microprocessor.

The memory 920 can include any one or combination of volatile memory elements and non-volatile memory elements. Note that the memory 920 can have a distributed architecture, where various components are situated remote from one another, but can be accessed by the processor 910.

The software in the memory 920 may include one or more separate programs, each of which comprises an ordered listing of executable instructions for implementing logical functions.

The operating system 950 controls the execution of other computer programs, and provides scheduling, input-output control, file and data management, memory management, and communication control and related services. It is contemplated by the inventors that the application 980 for implementing exemplary embodiments may be applicable on all commercially available operating systems.

Application 980 may be a source program, executable program (object code), script, or any other entity comprising a set of instructions to be performed.

The I/O devices 930 may include input and output devices such as a mouse, keyboard, scanner, microphone, camera, display, a NIC, a bridge, a router, etc.

When the application 980 is implemented in software it should be noted that the application 980 can be stored on virtually any computer readable medium for use by or in connection with any computer related system or method.

The application 980 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device.

The proposed method(s), device(s) and/or system(s) may be implemented in hardware or software, or a mixture of both (for example, as firmware running on a hardware device). To the extent that an embodiment is implemented partly or wholly in software, the functional steps illustrated in the process flow diagrams may be performed by suitably programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a control method as described above when the program is run on the one or more physical computing devices.

To the extent that an embodiment is implemented partly or wholly in hardware, some of the blocks shown in the block diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flow diagrams and combinations of blocks in the block diagrams and/or flow diagrams, can be implemented by special purpose hardware-based systems that perform the specified functions or acts or carry out combinations of special purpose hardware and computer instructions.

It should be understood that the Figures are merely schematic and are not drawn to scale. It should also be understood that the same reference numerals are used throughout the Figures to indicate the same or similar parts.

It should also be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the description, appended claims, and accompanying drawings. The mere fact that certain measures are recited in mutually different dependent claims does not indicate that a combination of these measures cannot be used to an advantage.

## Claims

1. A method for denoising a basis material spectral CT image of an anatomical structure, comprising:

   obtaining (110) a noise estimate image comprising a plurality of noise values, each noise value associated with a different part of the spectral CT image and describing an expected noise in the associated part of the spectral CT image;
   obtaining (120) a structural image describing the anatomical structure of the subject included in the spectral CT image;
   modifying (130) the noise estimate image based on the structural image; and
   generating (140), using a spectral image denoising algorithm, a denoised spectral CT image based on the spectral CT image and the modified noise estimate image.

2. The method of claim 1, wherein the structural image comprises a plurality of Hounsfield Unit, HU, values, each HU value associated with a different part of the spectral CT image.

3. The method of claim 2, wherein modifying (130) the noise estimate image comprises, for each of the plurality of noise values, adjusting (132) the noise value based on the HU value associated with the same part of the spectral CT image as the noise value.

4. The method of claim 3, wherein adjusting (132) the noise value comprises scaling the noise value based on an inverse of the HU value.

5. The method of any of claims 1-4, wherein the structural image is based on a non-spectral CT image of the anatomical structure of the subject.

6. The method of claim 5, wherein obtaining (110) the noise estimate image comprises:

generating (112), using a non-spectral image denoising algorithm, a denoised non-spectral CT image based on the non-spectral CT image; and

generating (114) the noise estimate image based on a difference between the denoised non-spectral CT image and the non-spectral CT image.

7. The method of claim 6, wherein generating (112) the denoised non-spectral CT image comprises providing the non-spectral CT image to a machine-learning based algorithm.

8. The method of claim 6 or 7, wherein the structural image is the denoised non-spectral CT image.

9. The method of any of claims 1-8, wherein generating (140) the denoised spectral CT image comprises applying a bi-lateral filter to the spectral CT image, wherein one or more parameters of the bi-lateral filter are based on the modified noise estimate image.

10. The method of claim 9, wherein a range weight of the bi-lateral filter is based on the modified noise estimate image.

11. The method of claim 10, wherein the range weight of the bi-lateral filter is defined according to:

$$w^{Range}(i') = exp\left(-\frac{(S(i) - S(i + i'))^2}{2(\alpha\sigma^{Noise}(i))^2}\right)$$

wherein S(i) represents the structural image, and $\sigma^{Noise}$ represents the modified noise estimate image.

12. The method of any of claims 1-11, further comprising generating (150) at least one spectral result image based on the denoised spectral CT image.

13. The method of any of claims 1-11, further comprising generating (150) a Mono-E, an Iodine Density, Z-effective and/or a Calcium Suppressed spectral result image based on the denoised spectral CT image.

14. A computer program comprising computer program code which is adapted, when said program is run on a computer, to implement the method of any one of claims 10 to 13.

15. A system (200) for denoising a basis material spectral CT image of an anatomical structure, comprising:
an interface (210) configured to:

obtain a noise estimate image comprising a plurality of noise values, each noise value associated with a different part of the spectral CT image and describing an expected noise in the associated part of the spectral CT image; and

obtain a structural image describing the anatomical structure of the subject included in the spectral CT image; a noise adaptation module (220) configured to modify the noise estimate image based on the structural image; and

a filtering module (230) configured to generate, using a spectral image denoising algorithm, a denoised spectral CT image based on the spectral CT image and the modified noise estimate image.

100

**110** — Obtain a noise estimate image

> Generate a denoised image based on non-spectral CT image — 112

> Generate the noise estimate image based on denoised image — 114

**120** — Obtain a structural image

**130** — Modify the noise estimate image based on the structural image

> Adjust noise values based on associated HU values — 132

**140** — Generate a denoised spectral CT image

**150** — Generate a spectral result image

FIG. 1

200

210

Noise estimate image → | Interface | ← Structural Image

Noise adaptation module ～ 220

Spectral CT image → | Filtering module | ～ 230

FIG. 2

FIG. 3

EP 4 787 292 A1

Europäisches
Patentamt
European
Patent Office
Office européen
des brevets

**EUROPEAN SEARCH REPORT**

Application Number

EP 25 15 4684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENGHENG TOUCH ET AL: "A neural network-based method for spectral distortion correction in photon counting x-ray CT", PHYSICS IN MEDICINE AND BIOLOGY, INSTITUTE OF PHYSICS PUBLISHING, BRISTOL GB, vol. 61, no. 16, 29 July 2016 (2016-07-29), pages 6132-6153, XP020307577, ISSN: 0031-9155, DOI: 10.1088/0031-9155/61/16/6132 [retrieved on 2016-07-29] | 1-3,9, 10,12-15 | INV. G06T5/70 G06T5/50 G06T5/20 |
| A | * abstract * | 4-8,11 | |
| A | CLARK D P ET AL: "A constrained Bregman framework for unsupervised convolutional denoising of multi-channel x-ray CT data", PROGRESS IN BIOMEDICAL OPTICS AND IMAGING, SPIE - INTERNATIONAL SOCIETY FOR OPTICAL ENGINEERING, BELLINGHAM, WA, US, vol. 11595, 15 February 2021 (2021-02-15), pages 115950J-115950J, XP060139739, ISSN: 1605-7422, DOI: 10.1117/12.2581832 ISBN: 978-1-5106-0027-0 * abstract * * sections "Introduction", "1.1 Constrained Bregman framework" * | 1-15 | |

TECHNICAL FIELDS SEARCHED (IPC)

G06T

The present search report has been drawn up for all claims

| Place of search | Date of completion of the search | Examiner |
|---|---|---|
| Munich | 3 June 2025 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13